# EUROPÄISCHE PATENTSCHRIFT

(11) **EP 1 276 694 B1**
(45) Veröffentlichungstag und Bekanntmachung des Hinweises auf die Patenterteilung: **24.11.2004**
(21) Anmeldenummer: 01933877.1
(22) Anmeldetag: 24.04.2001
(51) Int. Cl.: C01B 31/08, C01B 31/10, B01J 20/20, A62D 9/00

(54) **VERFAHREN ZUR HERSTELLUNG KUGELFÖRMIGER AKTIVKOHLE**
METHOD FOR PRODUCING SPHERICAL ACTIVATED CARBON
PROCEDE DE PRODUCTION DE CHARBON ACTIF SOUS FORME DE BILLES

(30) Priorität: 28.04.2000 DE 10020921; 18.08.2000 DE 10040485; 22.12.2000 DE 10065936; 24.02.2001 DE 10109158
(43) Veröffentlichungstag der Anmeldung: 22.01.2003
(73) Patentinhaber: Blücher GmbH, 40699 Erkrath (DE)
(72) Erfinder: VON BLÜCHER, Hasso, 40699 Erkrath (DE); DE RUITER, Ernest, 51381 Leverkusen (DE)
(74) Vertreter: Gesthuysen, von Rohr & Eggert
(86) Internationale Anmeldenummer: PCT/EP2001/004615
(87) Internationale Veröffentlichungsnummer: WO 2001/083368

(56) Entgegenhaltungen:
- EP-A- 0 326 271
- EP-A- 0 814 056
- WO-A-01/02295
- WO-A-96/21616
- WO-A-99/28234
- DE-A- 19 860 661
- DATABASE WPI Section Ch, Week 199510 Derwent Publications Ltd., London, GB; Class A35, AN 1995-074005 XP002178951 & SU 1 836 138 A (STRELKO V V), 23. August 1993 (1993-08-23)
- DATABASE CA [Online] CHEMICAL ABSTRACTS SERVICE, COLUMBUS, OHIO, US; OKIDO, SADAO ET AL: "Carbonization of synthetic resin" retrieved from STN Database accession no. 107:239318 CA XP002178950 & JP 62 197308 A (JAPAN ORGANO CO., LTD., JAPAN;KURARAY CHEMICAL CO., LTD.) 1. September 1987 (1987-09-01)

## Beschreibung

Die vorliegende Erfindung betrifft ein Verfahren zur Herstellung von Aktivkohle in Kugelform ("Kugelkohle"). Die auf diese Weise hergestellten Aktivkohleprodukte können für verschiedene Anwendungen, insbesondere für Filter oder für Schutzmaterialien wie beispielsweise Schutzanzüge, verwendet werden.

Aktivkohle ist aufgrund ihrer recht unspezifischen adsorptiven Eigenschaften das am meisten angewandte Adsorbens. Gesetzliche Auflagen, aber auch das steigende Bewußtsein der Verantwortung für die Umwelt, führen zu einem steigenden Bedarf an Aktivkohle.

Aktivkohle wird im allgemeinen durch Schwelung (Carbonisierung, Pyrolyse) und anschließende Aktivierung kohlenstoffhaltiger Verbindungen erhalten, wobei solche Verbindungen bevorzugt werden, die zu ökonomisch vemünfagen Ausbeuten führen, denn die Gewichtsverluste durch Abspalten flüchtiger Bestandteile beim Schwelen und durch den Abbrand beim Aktivieren sind erheblich. Für weitere Einzelheiten der Aktivkohleherstellung kann beispielsweise verwiesen werden auf H. v. Kienle und E. Bäder, Aktivkohle und ihre industrielle Anwendung, Enke Verlag Stuttgart, 1980.

Aber auch die Beschaffenheit der erzeugten Aktivkohle - fein- oder grobporig, fest oder brüchig - hängt vom Ausgangsmaterial ab. Übliche Ausgangsmaterialien sind Kokosnußschalen, Holzabfälle, Torf, Steinkohle, Peche, aber auch besondere Kunststoffe, die unter anderem bei der Herstellung von Aktivkohlegeweben eine gewisse Rolle spielen.

Aktivkohle wird in verschiedenen Formen verwendet: Pulverkohle, Splitterkohle, Kornkohle, Formkohle und seit Ende der siebziger Jahre auch kugelförmige Aktivkohle ("Kugelkohle"). Kugelförmige Aktivkohle hat gegenüber anderen Formen von Aktivkohle wie Pulver-, Splitter-, Komkohle und dergleichen eine Reihe von Vorteilen, die sie für bestimmte Applikationen wertvoll oder sogar unverzichtbar macht: Sie ist rieselfähig, enorm abriebfest (staubfrei) und sehr hart. Wegen des hohen Preises beschränkt sich aber ihr Einsatz im wesentlichen auf Schutzanzüge und hochwertige Filter für Schadstoffe in Luftströmen.

Kugelkohle ist wegen ihrer speziellen Form, aber auch wegen der extrem hohen Abriebfestigkeit, beispielsweise für besondere Einsatzgebiete, wie z. B. Flächenfilter für Schutzanzüge gegen chemische Gifte und Filter für niedrige Schadstoffkonzentrationen in großen Luftmengen, sehr gefragt. So kann bei der Beladung von retikulierten, großporigen Polyurethanschäumen mit Aktivkohle gemäß der DE 38 13 563 A1 nur eine gut rieselfähige Kohle eingesetzt werden, wenn auch die inneren Schichten des Schaumstoffmaterials optimal belegt werden sollen. Bei der Herstellung von Schutzanzügen gegen chemische Gifte in Anlehnung an die DE 33 04 349 C3 beispielsweise kann ebenfalls nur eine hoch abriebfeste Kohle eingesetzt werden, und nur Kugelkohle erfüllt diese Anforderung.

Kugelkohle wird heute noch meist durch mehrstufige und sehr aufwendige Verfahren hergestellt. Das bekannteste Verfahren besteht in der Herstellung von Kügelchen aus Steinkohlenteerpech und geeigneten asphaltartigen Rückständen der Erdölchemie, welche oxidiert - damit sie unschmelzbar werden -, geschwelt und aktiviert werden. Beispielsweise kann die Kugelkohle auch in einem mehrstufigen Verfahren ausgehend von Bitumen hergestellt werden. Diese mehrstufigen Verfahren sind sehr kostenintensiv, und der damit verbundene hohe Preis dieser Kugelkohle verhindert viele Anwendungen, bei denen die Kugelkohle aufgrund ihrer Eigenschaften eigentlich bevorzugt werden müßte.

Folglich wurde versucht, hochwertige Kugelkohle auf anderem Wege herzustellen.

Aus dem Stand der Technik bekannt ist die Herstellung von Kugelkohle durch Schwelung und anschließende Aktivierung von neuen oder gebrauchten Ionenaustauschern, die Sulfonsäuregruppen enthalten, bzw. durch Schwelung von Ionenaustauschervorstufen in Gegenwart von Schwefelsäure und anschließende Aktivierung, wobei die Sulfonsäuregruppen bzw. die Schwefelsäure die Funktion eines Vernetzers haben, wobei die Ausbeuten - unabhängig davon, ob von fertigen Kationenaustauschern oder von unsulfonierten Ionenaustauschervorstufen ausgegangen wird - etwa 30 bis 50 % betragen, bezogen auf organisches bzw. polymeres Ausgangsmaterial. Solche Verfahren sind beispielsweise in der DE 43 28 219 A1 und in der DE 43 04 026 A1 sowie in der DE 196 00 237 A1 einschließlich der deutschen Zusatzanmeldung DE 196 25 069 beschrieben. Nachteilig und problematisch bei diesen Verfahren sind aber insbesondere die großen Mengen an freigesetztem Schwefeldioxid - pro kg Endprodukt etwa 1 kg SO₂ - sowie die damit unter anderem verbundenen Korrosionsprobleme in den Herstellapparaturen. Bei der Verwendung gebrauchter Ionenaustauscherharze, insbesondere gebrauchter Kationenaustauscherharze, als Ausgangsmaterialien besteht zudem das Problem, daß diese - trotz einer Wäsche mit Säure - mit Kationen, die sich dann im Endprodukt anreichern, verunreinigt sind, so daß die Herstellung größerer Mengen Kugelkohle in gleichbleibender Qualität folglich sehr schwierig ist. Bei der Verwendung von Ionenaustauschervorstufen - also Polymerkügelchen ohne Austauschergruppen (Sulfonsäuregruppen) - sind zudem große Mengen von Schwefelsäure und/oder Oleum für die Vernetzung während der Schwelung erforderlich.

In der WO 98/07655 wird ein Verfahren zur Herstellung von Aktivkohlekügelchen beschrieben, bei dem zunächst eine Mischung, die einen aus der Diisocyanatherstellung stammenden Destillationsrückstand, einen kohlenstoffhaltigen Verarbeitungshilfsstoff und gegebenenfalls einen oder mehrere weitere Zusatzstoffe umfaßt, zu rieselförmigen Kügelchen verarbeitet wird und anschließend die auf diese Weise erhaltenen Kügelchen geschwelt und dann aktiviert werden. Auch bei diesem Verfahren werden bei der Schwelung stoßweise große Mengen an Zersetzungsprodukten freigesetzt, was mit den zuvor geschilderten Problemen verbunden ist.

Die WO 96/21616 A1 betrifft ein Verfahren zur Herstellung von körniger Aktivkohle, bei den man Kügelchen einer Styrol/Divinylbenzol-Copolymermatrix, bei der es sich insbesondere um Anionenaustauscher oder deren Vorstufen handelt, mit konzentrierter Schwefelsäure bei Temperaturen bis mindestens 750 °C schwelt und anschließend das Pyrolyseprodukt bei Temperaturen von 800 bis 900 °C aktiviert.

Die EP 0 814 056 A1 betrifft ein Verfahren zur Herstellung von körniger Aktivkohle nach der deutschen Patentanmeldung 196 00 237, wobei man Kügelchen einer Styrol/Divinylbenzol-Copolymermatrix mit konzentrierter Schwefelsäure bei Temperaturen bis mindestens 750 °C, vorzugsweise bis 900 °C, schwelt, und anschließend das Pyrolyseprodukt bei Temperaturen von 800 bis 900 °C aktiviert, wobei die Schwefelsäure in einer Menge von mindestens 39 Gew.-%, berechnet als SO₃ und bezogen auf die Trockensubstanz der Matrix, eingesetzt wird.

Die WO 99/28234 A1 beschreibt ein Verfahren zur Herstellung von Aktivkohle aus Polymeren mit aromatischen Kernen, insbesondere aus Styrol/Divinylbenzol-Copolymeren, bei dem Kenngrößen der Aktivkohle über die Einstellung der Verfahrensparameter gezielt steuerbar sind, wobei das Ausgangspolymer zunächst mit konzentrierter Schwefelsäure in einem bestimmten Mengenverhältnis sulfoniert wird, überschüssige Schwefelsäure nach dem Sulfonieren abgetrennt wird und das sulfonierte Produkt anschließend pyrolysiert und aktiviert wird.

Die EP 0 326 271 A1 beschreibt ein Verfahren zu Herstellung von Aktivkohlepartikeln mit multimodaler Porengrößenverteilung und einem minimalen Mikroporenvolumen von 0,02 cm³, bei dem polysulfonierte, makroporöse, vemetzte vinylaromatische Polymere bei 300 bis 1200 °C pyrolysiert und anschließend bei 800 bis 1000 °C in einer aktivierenden Atmosphäre aktiviert werden.

Der Derwent-Abstract Nr. 1995-074005 [10] (XP-002178951) zu SU 1 836 138 A beschreibt die Herstellung von Aktivkohle durch Carbonisierung kugelförmiger poröser organischer Ausgangsmaterialien, die zuvor durch Behandlung mit konzentrierter Schwefelsäure oder Oleum sulfoniert worden sind, mit nachfolgender Aktivierung und Modifizierung.

Chemical Abstracts Nr. 107:239318 (XP-002178950) zu JP 62197308 A beschreibt die Herstellung von Aktivkohle durch Carbonisierung mit nachfolgender Aktivierung synthetischer Harze auf Styrol/Divinylbenzol- Basis mit 10 bis 30 Gew.-% Divinylbenzolanteil, die zuvor durch Behandlung mit konzentrierter Schwefelsäure sulfoniert worden sind.

Das der vorliegenden Erfindung zugrunde liegende Problem besteht in der Bereitstellung eines neuen Verfahrens zur Herstellung von Aktivkohle in Kugelform, welches die zuvor geschilderten, mit den Verfahren des Standes der Technik verbundenen Nachteile - zumindest teilweise - vermeiden soll. Dabei soll das Verfahren eine weniger aufwendige, möglichst wenig kostenintensive Herstellung von Aktivkohle ermöglichen. Insbesondere soll das Verfahren für den Fall, daß von sulfonsäuregruppehaltigen Ausgangsmaterialien ausgegangen wird, die Entsorgung von entstehendem SO₂ erleichtern.

Eine weitere Aufgabe der vorliegenden Erfindung besteht darin, ein Verfahren zur Herstellung von Aktivkohle in Kugelform bereitzustellen, welches die Möglichkeit bieten soll, neben bereits bekannten Ausgangsmaterialien für die Aktivkohleherstellung auch neue, bislang für die Aktivkohleherstellung noch nicht eingesetzte Ausgangsmaterialien einzusetzen.

Die Anmelderin hat nun überraschenderweise herausgefunden, daß das vorliegenden Erfindung zugrunde liegende Problem gelöst werden kann, indem man die bei der Herstellung von Aktivkohle erforderlichen Verfahrensschritte der Schwelung einerseits und der Aktivierung andererseits voneinander trennt und die Schwelung kontinuierlich, aber die Nachschwelung und Aktivierung diskontinuierlich durchführt. Insbesondere basiert die vorliegende Erfindung auf der Trennung der korrosiven Phase (Vorschwelung, verbunden mit SO₂-Ausstoß) von der Hochtemperatur-Phase (Aktivierung). Die Anmelderin hat nämlich überraschenderweise gefunden, daß vorgeschweltes Ausgangsmaterial nicht mehr korrosiv ist, d. h. bei weiterer Temperaturerhöhung keine korrosiven Stoffe mehr entstehen.

Gegenstand der vorliegenden Erfindung ist somit ein Verfahren zur Herstellung kugelförmiger Aktivkohle durch Schwelung und Aktivierung von Polymerkügelchen auf Basis von Styrol und Divinylbenzol, die funktionelle chemische Gruppen, welche bei ihrer thermischen Zersetzung zu freien Radikalen und somit zu Vernetzungen führen, insbesondere Sulfonsäuregruppen, enthalten, wobei die Polymerkügelchen zunächst kontinuierlich vorgeschwelt und anschließend diskontinuierlich nachgeschwelt und aktiviert werden.

Bei der Schwelung - synonym auch als "Carbonisierung" oder "Pyrolyse" bezeichnet und im Fall der vorliegenden Erfindung bestehend aus Vorschwelung und Nachschwelung - erfolgt die Umwandlung des kohlenstoffhaltigen Ausgangsmaterials zu Kohlenstoff, d. h. mit anderen Worten wird das Ausgangsmaterial verkohlt. Bei der Schwelung der zuvor genannten, insbesondere porösen und/oder gelförmigen, organischen Polymerkügelchen auf Basis von Styrol und Divinylbenzol, die funktionelle chemische Gruppen, welche bei ihrer thermischen Zersetzung zu freien Radikalen und somit zu Vernetzungen führen, insbesondere Sulfonsäuregruppen, enthalten, werden - unter Abspaltung flüchtiger Bestandteile wie insbesondere SO₂ - die funktionellen chemischen Gruppen, insbesondere Sulfonsäuregruppen, zerstört, und es bilden sich freie Radikale, die eine starke Vernetzung bewirken - ohne die es ja keinen Pyrolyserückstand (= Kohlenstoff) gäbe. Im allgemeinen wird die Pyrolyse unter inerter Atmosphäre (z. B. Stickstoff) oder allenfalls leicht oxidierender Atmosphäre durchgeführt. Gleichermaßen kann es vorteilhaft sein, während der Schwelung, insbesondere bei höheren Temperaturen (z. B. im Bereich von etwa 500 °C bis 650 °C), zu der Inertatmosphäre eine kleinere Menge an Sauerstoff, insbesondere in Form von Luft (z. B. 1 bis 5 %), zuzugeben, um eine Oxidation des carbonisierten Polymerskeletts zu bewirken und auf diese Weise die Aktivierung zu erleichtern.

Erfindungsgemäß kann die kontinuierlich durchgeführte Vorschwelung beispielsweise in einem kontinuierlich arbeitenden Drehrohr mit einem Temperaturgradienten von 100 °C bis 850 °C, vorzugsweise 100 °C bis 650 °C, durchgeführt werden. Die Gesamtverweilzeit sollte dabei etwa 1 Stunde bis etwa 4 Stunden, vorzugsweise etwa 2 Stunden bis etwa 3 Stunden, betragen. Insbesondere sollte das geschwelte Material dabei eine Temperatur von 400 °C bis 800 °C, vorzugsweise 550 °C bis 600 °C, erreichen. Wie zuvor erwähnt, verfährt man dabei vorzugsweise unter inerten Bedingungen (z. B. Stickstoff) oder allenfalls leicht oxidierenden Bedingungen.

Anschließend kann das kontinuierlich geschwelte Material in einem vorzugsweise thermisch isolierten Behälter gesammelt und bei Erreichen der Füllmenge dann in ein diskontinuierlich arbeitendes Drehrohr zur weiteren Pyrolyse (Nachschwelung) und anschließenden Aktivierung eingebracht werden.

Bei der Schwelung, insbesondere bei der Nachschwelung, kann dem Inertgas (z. B. Stickstoff) eine kleine Menge Sauerstoff bzw. Luft (z. B. etwa 1 bis 5 %) zugegeben werden, insbesondere im Bereich höherer Temperaturen (z. B. im Bereich von etwa 500 °C bis etwa 650 °C,). Hierdurch kann die Aktivierung erleichtert werden, wie im folgenden noch näher ausgeführt wird.

Der Schwelung - erfindungsgemäß bestehend aus Vorschwelung und Nachschwelung - schließt sich dann die Aktivierung an. Diese erfolgt unter an sich bekannten Bedingungen. Das Grundprinzip der Aktivierung besteht darin, einen Teil des bei der Schwelung generierten Kohlenstoffs selektiv und gezielt unter geeigneten Bedingungen abzubauen. Hierdurch entstehen zahlreiche Poren, Spalten und Risse, und die auf die Masseneinheit bezogene Oberfläche nimmt erheblich zu. Bei der Aktivierung wird also ein gezielter Abbrand der Kohle vorgenommen. Da bei der Aktivierung Kohlenstoff abgebaut wird, tritt bei diesem Vorgang ein zum Teil erheblicher Substanzverlust ein, welcher unter optimalen Bedingungen gleichbedeutend mit einer Erhöhung der Porosität ist und Zunahme der inneren Oberfläche (Porenvolumen) ist. Die Aktivierung erfolgt daher unter selektiven bzw. kontrollierten, oxidierenden Bedingungen. Übliche Aktivierungsgase sind im allgemeinen Sauerstoff, insbesondere in Form von Luft, Wasserdampf und/oder Kohlendioxid sowie Gemische dieser Aktivierungsgase. Da bei Sauerstoff die Gefahr besteht, daß die Einwirkung nicht nur selektiv, sondern an der Gesamtoberfläche erfolgt - wodurch die Kohle mehr oder weniger stark abbrennt -, gibt man Wasserdampf und Kohlendioxid den Vorzug. Ganz besonders bevorzugt ist Wasserdampf, gegebenenfalls in Mischung mit einem Inertgas (z. B. Stickstoff). Um eine technisch ausreichend hohe Reaktionsgeschwindigkeit zu erzielen, wird die Aktivierung im allgemeinen bei Temperaturen von etwa 800 °C bis etwa 1.000 °C durchgeführt.

Erfindungsgemäß kann die Aktivierung insbesondere mit einem Gemisch aus Wasserdampf und Stickstoff, insbesondere bei Temperaturen von etwa 850 °C bis etwa 960 °C, vorzugsweise etwa 910 °C bis etwa 930 °C, durchgeführt werden. Die Verweilzeiten können dabei etwa 2 Stunden bis etwa 5 Stunden, vorzugsweise etwa 2 Stunden bis etwa 3 Stunden, betragen.

Das erfindungsgemäße Verfahren kann beispielsweise derart durchgeführt werden, daß zunächst die kontinuierlich durchgeführte Vorschwelung in den ersten 80 Minuten bis 120 Minuten bei Temperaturen von bis zu etwa 650 °C, vorzugsweise bei etwa 500 °C, durchgeführt werden kann, wobei hierbei der größte Teil des SO₂ ausgestoßen wird, und anschließend - nach erfolgter Nachschwelung - die Aktivierung bei etwa 850 °C bis etwa 950 °C, insbesondere bei etwa 910 °C bis etwa 930°C, durchgeführt wird, wobei für die Aktivierung - je nach gewünschter innerer Oberfläche der Aktivkohlekügelchen und Volumen bzw. Füllhöhe des Drehrohrs - etwa 2 Stunden bis etwa 5 Stunden benötigt werden und als Aktivierungsgas vorzugsweise Wasserdampf in Stickstoff, besonders bevorzugt etwa 25 % Wasserdampf in Stickstoff, eingesetzt wird.

Als Ausgangsmaterial für die erfindungsgemäße Herstellung der kugelförmigen Aktivkohle werden organische Polymerkügelchen auf Basis von Styrol und Divinylbenzol eingesetzt, die funktionelle chemische Gruppen enthalten, welche bei ihrer thermischen Zersetzung zu freien Radikalen und somit zu Vernetzungen führen, insbesondere saure Gruppen wie Sulfonsäuregruppen. Als Ausgangsmaterialien können beispielsweise organische Polymerkügelchen verwendet werden, die ein im wesentlichen aus Polystyrol bestehendes Polymerskelett besitzen, wobei die Polystyrolketten mittels einer Komponente mit mindestens zwei Vinylgruppen pro Molekül, insbesondere Divinylbenzol, stellenweise verbunden bzw. vernetzt sein können und das Polymerskelett funktionelle chemische Gruppen, die bei ihrer thermischen Zersetzung zu freien Radikalen und somit zu Vernetzungen führen, insbesondere Sulfonsäuregruppen, enthalten können. Insbesondere handelt es sich bei dem für die erfindungsgemäße Herstellung der kugelförmigen Aktivkohle verwendeten Ausgangsmaterial um organische Polymerkügelchen auf Basis von mit Divinylbenzol vernetztem Polystyrol, die funktionelle chemische Gruppen, insbesondere saure Gruppen wie Sulfonsäuregruppen, welche bei ihrer thermischen Zersetzung zu freien Radikalen und somit zu Vernetzungen führen, enthalten; dabei kann der Divinylbenzolgehalt, bezogen auf die Polymerkügelchen, bis zu etwa 20 Gew.-%, insbesondere bis zu etwa 15 Gew.-%, vorzugsweise bis zu etwa 10 Gew.-%, betragen. Anstelle von Divinylbenzol kann zur Vernetzung des Polystyrols aber auch eine vergleichbare, zur Vernetzung von Polystyrol geeignete, organische, insbesondere aromatische organische Verbindung mit mindestens zwei vernetzenden Gruppen, insbesondere Vinylgruppen, pro Molekül eingesetzt werden.

Das polymere Ausgangsmaterial kann beispielsweise in poröser, insbesondere makroporöser, und/oder gelförmiger Form vorliegen. Im Falle von gelförmigen Ausgangsmaterialien werden mikroporöse Polymerteilchen bevorzugt eingesetzt. Bevorzugt werden makroporöse oder mikroporöse gelförmige Ausgangsmaterialien.

Da die Form bzw. Gestalt des polymeren Ausgangsmaterials bei der Schwelung und Pyrolyse im wesentlichen erhalten bleibt - wobei allerdings durch die Schwelung und Aktivierung eine Reduzierung der Teilchengröße bzw. des Teilchendurchmessers eintritt , muß zur Herstellung von Aktivkohle in Kugelform auch von Polymerkügelchen, d. h. Polymeren in Kugelform bzw. annähernd in Kugelform, ausgegangen werden. Im allgemeinen besitzen die erfindungsgemäß eingesetzten Polymerkügelchen Durchmesser von bis zu etwa 2 mm, insbesondere von bis zu etwa 1,5 mm oder weniger.

Gemäß einer ersten Ausführungsform der vorliegenden Erfindung sind die bei der Schwelung bzw. Pyrolyse zu Vernetzungen führenden, chemischen funktionellen Gruppen, insbesondere Sulfonsäuregruppen, bereits im Ausgangsmaterial vorhanden. Vorzugsweise beträgt bei dieser Ausführungsform das Gewichtsverhältnis Polymer/funktionelle Gruppen bzw. Polymer/Sulfonsäuregruppen etwa 2 : 1 bis etwa 1 : 1.

Beispiele für polymere Ausgangsmaterialien, bei denen die bei der Schwelung bzw. Pyrolyse zu Vernetzungen führenden, chemischen funktionellen Gruppen, insbesondere Sulfonsäuregruppen, bereits im eigentlichen Ausgangsmaterial vorhanden sind, sind Ionenaustauscherharze, insbesondere stark saure Kationenaustauscherharze, d. h. Kationenaustauscherharze mit Sulfonsäuregruppen. Dabei kann es sich um ungebrauchte oder aber auch gebrauchte Ionenaustauscherharze handeln. Im Falle gebrauchter Kationenaustauscher können diese mit Metallionen verunreinigt sein, die dann im Endprodukt als katalytische Metallimprägnierung vorhanden sind.

Für den Fall, daß von gebrauchten bzw. verbrauchten Ionenaustauschern ausgegangen wird, betrifft die vorliegende Erfindung gleichsam ein Verfahren zur Entsorgung gebrauchter bzw. verbrauchter Ionenaustauscher. Mit dem erfindungsgemäßen Verfahren können nämlich die zu entsorgenden, gebrauchten Ionenaustauscher in ein nützliches Produkt - Aktivkohle - umgesetzt werden, welches durch seine Eigenschaft, Umweltgifte zu adsorbieren, zum Umweltschutz beiträgt.

Weitere Beispiele für polymere Ausgangsmaterialien, bei denen die bei der Schwelung bzw. Pyrolyse zu Vernetzungen führenden, chemischen funktionellen Gruppen, insbesondere Sulfonsäuregruppen, bereits im eigentlichen Ausgangsmaterial vorhanden sind, sind saure organische Katalysatoren, beispielsweise Katalysatoren für die Bisphenolsynthese oder für die MTBE-Synthese (MTBE = Methyl-tert.-Butylether), vorzugsweise Sulfonsäuregruppen enthaltende organische Katalysatoren. Besonders bevorzugt werden saure organische Katalysatoren der zuvor beschriebenen Art, welche porös und/oder gelförmig sind.

Die Anmelderin hat nämlich überraschenderweise herausgefunden, daß beispielsweise die bei der MTBE- oder Bisphenolsynthese anfallenden, inaktiv gewordenen, sauren organischen Katalysatoren ein gutes Ausgangsmaterial für die Herstellung von Kugelkohle sind. Das aus dem Reaktor zur Bisphenoloder zur MTBE-Synthese stammende kugelförmige Katalysatormaterial kann dann - gegebenenfalls nach Wäsche und Trocknung - in erfindungsgemäßer Weise geschwelt und aktiviert werden. Noch anhaftendes Phenol im Fall von Katalysatoren aus der Bisphenolsynthese wird bei der Schwelung bzw. Pyrolyse zerstört oder/und in der Nachverbrennung verbrannt. Die Ausbeuten an Aktivkohlekügelchen sind im Fall der organischen Katalysatoren ähnlich wie bei Kationenaustauschern. Im Gegensatz zu gebrauchten Ionenaustauschern ist aber bei gebrauchten organischen Katalysatoren keine Anreicherung von Kationen in der Kohle zu befürchten. Erfindungsgemäß lassen sich als Ausgangsmaterialien also ohne weiteres die verbrauchten bzw. erschöpften, als Abfall anfallenden, sauren organischen Katalysatoren aus der MTBE-Synthese oder aus der Synthese von Bisphenol aus Phenol und Aceton einsetzen und auf diese Weise elegant entsorgen.

Für den Fall, daß von verbrauchten bzw. inaktiv gewordenen, sauren, polymeren organischen Katalysatoren auf Basis von Styrol und Divinylbenzol, insbesondere aus der MTBE- oder aus der Bisphenolsynthese, ausgegangen wird, betrifft die vorliegende Erfindung gleichsam ein Verfahren zur Entsorgung verbrauchter bzw. inert gewordener Katalysatoren. Mit dem erfindungsgemäßen Verfahren können die zu entsorgende Abfälle in ein nützliches Produkt - Aktivkohle - umgesetzt werden, welches durch seine Eigenschaft, Umweltgifte zu adsorbieren, zum Umweltschutz beiträgt.

Auch bei dieser ersten Ausführungsform der vorliegenden Erfindung, gemäß welcher die bei der Schwelung bzw. Pyrolyse zu Vernetzungen führenden chemischen funktionellen Gruppen, insbesondere Sulfonsäuregruppen, bereits im Ausgangsmaterial vorhanden sind, kann - insbesondere zur Erhöhung der Ausbeute an Kugelkohle - eine Menge von 5 bis 25 % SO₃ in Form von Schwefelsäure und/oder Oleum vor und/oder während der Schwelung zugegeben werden. Hierdurch können auch die Zeiten für die Vorschwelung verkürzt werden, beispielsweise auf etwa 30 bis etwa 120 Minuten, insbesondere etwa 30 bis etwa 90 Minuten oder weniger.

Es wurde gefunden, daß sich die Ausbeuten an Kugelkohle mit steigendem Säuregehalt des Ausgangsmaterials, insbesondere Ionenaustauscher oder Katalysatoren, erhöhen. Wie zuvor erwähnt, können daher insbesondere Ionenaustauscher bzw. Katalysatoren mit niedrigerem Säuregehalt zur Verbesserung der Ausbeute mit etwas Oleum und/oder Schwefelsäure versetzt werden. Normalerweise genügen beispielsweise etwa 5 bis etwa 25 % gebundenes oder freies SO₃, bezogen auf Polymeranteil im Ausgangsmaterial.

Gemäß einer zweiten Ausführungsform der vorliegenden Erfindung sind die bei der Schwelung bzw. Pyrolyse zu Vernetzungen führenden, chemischen funktionellen Gruppen, insbesondere Sulfonsäuregruppen, noch nicht im eigentlichen Ausgangsmaterial vorhanden, sondern müssen noch in situ generiert werden. Vorzugsweise geschieht dies, indem die zu Vernetzungen führenden, chemischen funktionellen Gruppen, insbesondere Sulfonsäuregruppen, erst zu Beginn, d. h. vor und/oder während der Vorschwelung eingeführt werden. Dies kann beispielsweise durch Zugabe von SO₃, insbesondere in Form von Oleum, gegebenenfalls vermischt mit Schwefelsäure, vor und/oder während der Vorschwelung zu dem polymeren organischen Ausgangsmaterial in Kugelform erfolgen. Dabei kann das Gewichtsverhältnis Polymer/Oleum 20 % insbesondere etwa 1 : 1 bzw. das Gewichtsverhältnis Polymer/Oleum 20 %/Schwefelsäure insbesondere etwa 1 : 1 : 0,5 betragen.

Beispiele für solche Ausgangsmaterialien gemäß dieser zweiten Ausführungsform, bei denen die zu Vernetzungen führenden, chemischen funktionellen Gruppen, insbesondere Sulfonsäuregruppen, noch nicht im eigentlichen Ausgangsmaterial vorhanden sind, sondern in situ vor und/oder während der Vorschwelung generiert werden müssen, sind Vorstufen von Ionenaustauschern, also organische Polymerkügelchen ohne funktionelle Gruppen, die vor und/oder während der Schwelung, beispielsweise durch Zugabe von SO₃ in Form von Oleum oder Schwefelsäure, sulfoniert werden müssen.

Die Vorstufen für Ionenaustauscher können prinzipiell gelformig oder makroporös sein. Letztere sind wesentlich teurer, hauptsächlich wegen ihres beträchtlich höheren Divinylbenzolgehalts. Ihre zahlreichen Mesoporen bleiben während der Uinsetzung in Aktivkohle voll erhalten, was für manche Anwendungen sinnvoll ist. Die Geltypen führen hingegen zu ausgesprochen mikroporösen Kohlen: Das Porenvolumen kann bis zu 90 bis 95 % als Mikroporen vorliegen. Die Geltypen enthalten oft etwa 2 bis etwa 8 % Divinylbenzol. Aber auch nur schwach vernetzte Typen mit geringerem Gehalt an Divinylbenzol (circa 2 bis 4 % Divinylbenzol) überstehen die starke Quellung in der Säure, platzen also nicht bzw. zerbrechen nicht zu Halbkugeln. Es hat sich gezeigt, daß auch Typen mit sehr niedrigem Divinylbenzolgehalt erfindungsgemäß gut geeignet sind. Viel wichtiger ist die Sulfonierung, die so vollständig wie möglich sein muß, denn bei der Zersetzung der Sulfonsäuregruppen entstehen jene freien Radikale, die zu den für die Ausbeute verantwortlichen Vernetzungen führen.

Während ausgehend von Kationenaustauschern sowohl makroporöse als auch Geltypen eingesetzt werden können und die Wahl eher eine Frage der Wirtschaftlichkeit ist, werden allerdings Geltypen bevorzugt, wenn Vorstufen von Ionenaustauschern (= reine Polymere) eingesetzt werden. Der Grund ist folgender: Die makroporösen Vorstufen nehmen in ihren großen Poren - ähnlich einem Löschblatt - sehr viel Säure bzw. Oleum auf, so daß die Mischung aus Polymer und Säure trocken bzw. sandig ist und eine gleichmäßige Verteilung der Säure kaum erreicht wird. Abgesehen davon, führt jedoch das Schwelen und Aktivieren von Kationenaustauschern zu vergleichbaren Produkten, als wenn von Vorstufen und Säure ausgegangen wird.

Die Teilchengröße der erhaltenen Kugelkohle hängt von der Größe der Kügelchen im Ausgangsmaterial ab. Handelsübliche Ausgangsprodukte führen im allgemeinen zu Aktivkohlekügelchen von etwa 0,2 mm bis etwa 1,0 mm Durchmesser, insbesondere etwa 0,3 mm bis etwa 0,8 mm Durchmesser.

Beispielsweise kann das erfindungsgemäße Verfahren typischerweise wie folgt durchgeführt werden:

Geeignetes, Sulfonsäuregruppen enthaltendes, kugelförmiges polymeres Ausgangsmaterial auf Basis von Styrol und Divinylbenzol, z. B. Kationenaustauscher oder organische saure Katalysatoren, werden in ein ***kontinuierlich*** arbeitendes Drehrohr mit einem Temperaturgradienten von etwa 100 °C bis etwa 850 °C, vorzugsweise etwa 100 °C bis etwa 650 °C, eingebracht und vorgeschwelt. Dabei kann die Verweilzeit beispielsweise circa 1 bis 2 Stunden betragen. Es sollte eine Endtemperatur von zumindest etwa 550 °C erreicht werden.

Arbeitet man beispielsweise mit Vorstufen von Ionenaustauschern, also Polymerkügelchen auf Basis von Styrol und Divinylbenzol ohne funktionelle Gruppen, so kann am Anfang des Drehrohrs - z. B. bei etwa 100 °C - z. B. Schwefelsäure und/oder Oleum eingedüst werden; durch die Drehbewegung wird eine gute Durchmischung erreicht, die vorzugsweise abgeschlossen sein sollte, bevor Temperaturen von etwa 200 °C erreicht werden, was bei geeigneten Einbauten problemlos ist. Sehr gute Erfahrungen wurden beispielsweise mit 1 Teil Polymerkügelchen (Ionenaustauschervorstufen) plus 1 Teil Oleum 20 % plus 1/2 Teil Schwefelsäure 98 % gemacht, wobei hierbei der Überschuß an flüssiger Phase zu einer besonders guten Durchmischung führt.

Das heiße, vorgeschwelte Material kann dann in einem Behälter, der vorzugsweise wärmeisoliert sein sollte, gesammelt werden, bis eine Charge für das ***diskontinuierlich*** arbeitende Drehrohr beisammen ist.

Anschließend kann das vorzugsweise noch heiße, vorgeschwelte rieselfähige Material in einem ***diskontinuierlich*** arbeitenden Drehrohr fertigpyrolisiert (nachgeschwelt) und in der dem Fachmann bekannten Weise aktiviert werden. Wegen der vergleichsweise viel Zeit benötigenden Aktivierung ist ein kontinuierlich arbeitendes Drehrohr für diesen Verfahrensschritt nicht praktikabel, weil es extrem lang sein müßte. Je nach Aktivierungsgrad wurden Ausbeuten an Kugelkohle von 50 bis 75 %, bezogen auf polymeres Ausgangsmaterial, erzielt.

Wie zuvor erwähnt, läßt sich die Aktivierung erleichtern, wenn man bei der Nachschwelung, insbesondere im Bereich von etwa 500 °C bis etwa 650 °C, dem Inertgas eine kleine Menge Sauerstoff, insbesondere in Form von Luft (z. B. etwa 1 bis 5 %), zugibt. Dies führt zu einer Oxidation des carbonisierten Polymerskeletts, die durch Abspalten des Sauerstoffs ab etwa 700 °C bis etwa 750 °C als CO zu einer Anfangsporosität führt, welche die Aktivierung im Inneren der Masse fördert. Die Aktivierung kann beispielsweise mit Luft, CO₂ und/oder H₂O (Wasserdampf), vorzugsweise mit Wasserdampf, gegebenenfalls in Mischung bzw. Verdünnung mit einem Inertgas (z. B. Stickstoff), durchgeführt werden. Gute Resultate wurden beispielsweise mit einem Verhältnis Wasserdampf/Inertgas von etwa 1 : 3 erzielt.

Das erfindungsgemäße Verfahren kann also beispielhaft so durchgeführt werden, daß man das Ausgangsmaterial bei Temperaturen von bis zu maximal etwa 850 °C, vorzugsweise von bis zu maximal etwa 650 °C, kontinuierlich vorschwelt, dann gegebenenfalls das vorgeschwelte Material in einem Behälter sammelt und schließlich diskontinuierlich nachschwelt und bei Temperaturen von etwa 850 °C bis etwa 950 °C, insbesondere etwa 910 °C bis etwa 930°C, unter an sich bekannten Bedingungen, vorzugsweise mit Wasserdampf (gegebenenfalls in Mischung bzw. Verdünnung mit einem Inertgas, wie z. B. Stickstoff), aktiviert, wobei bei der Vor- und/oder Nachschwelung, insbesondere bei Temperaturen ab etwa 500 °C, dem Inertgas gegebenenfalls eine kleine Menge Sauerstoff, insbesondere in Form von Luft (z. B. etwa 1 bis 5 %), zugegeben werden kann.

Während die aus dem Stand der bekannten Verfahren, bei denen sowohl Schwelung und als auch Aktivierung batchweise bzw. diskontinuierlich durchgeführt werden, stoßweise sehr große Mengen an korrosivem SO₂ anfallen - was zu Problemen bei der Entsorgung bzw. Handhabung führt -, wird dagegen bei dem erfindungsgemäßen Verfahren bei der kontinuierlichen Vorschwelung das SO₂ kontinuierlich freigesetzt, was die Entsorgung bzw. Handhabung enorm erleichtert. Denn - mit Ausnahme des Verfahrens, bei welchem von Steinkohlenteerpech ausgegangen wird - haben die aus dem Stand der Technik bekannten Verfahren gemeinsam, daß pro kg Endprodukt sehr große Mengen SO₂, nämlich circa 1 kg, freigesetzt werden, wobei die Freisetzung von SO₂ hauptsächlich zwischen etwa 300 °C und etwa 450 °C, d. h. in SO₂-Spitzen, stattfindet, was die Entsorgung enorm erschwert: Die SO₂-Wäscher müssen bei den Verfahren des Standes der Technik an die SO₂-Spitzen angepaßt sein, so daß sie für die restliche Dauer des Verfahrens vollkommen überdimensioniert sind und eine Rückgewinnung von SO₂ sehr schwierig ist.

Es bestand deshalb das dringende Bedürfnis, die Entsorgung des bei der Aktivkohleherstellung, insbesondere bei der Pyrolyse bzw. Schwelung auftretenden SO₂ wesentlich zu erleichtern. Die erfindungsgemäße Lösung besteht darin, daß die Vorschwelung, die bei etwa 600 °C praktisch beendet ist, kontinuierlich durchgeführt wird, so daß ein gleichmäßiger Ausstoß von SO₂ (und einigen flüchtigen Kohlenwasserstoffen) erfolgt, während die Aktivierung diskontinuierlich durchgeführt wird.

Die Vorteile der Trennung der sauren Phase (Vorschwelung) von der Hochtemperaturphase (Aktivierung) sind mehrere:
1. Das kontinuierlich arbeitende Drehrohr für die Vorschwelung kann aus besonders säurefesten Stahlsorten, die für hohe Temperaturen weniger geeignet sind, hergestellt werden, während dagegen das diskontinuierlich arbeitende Drehrohr (Nachschwelung und Aktivierung) aus besonders für hohe Temperaturen geeignetem Stahl hergestellt werden kann. Mit anderen Worten ermöglicht die Trennung der vergleichsweise schnellen, korrosiven Stufe mit Freisetzung von viel SO₂ (Vorschwelung) von der vergleichsweise langsamen Aktivierung eine optimale Anpassung der apparativen Gegebenheiten: Da beispielsweise die Vorschwelung in Gegenwart von Säure nur etwa 60 bis etwa 120 Minuten benötigen kann, die Aktivierung hingegen mehrere Stunden, kann das Drehrohr für die Vorschwelung kleiner dimensioniert sein als das Drehrohr für die Nachschwelung/Aktivierung (Die lange Verweilzeit im großen Drehrohr für die Aktivierung ist auch der Grund dafür, daß es nicht als kontinuierlich arbeitend ausgeführt wird, weil die nötige Länge enorm wäre.).
2. Die Wäscher (Waschvorrichtungen) für SO₂ können viel kleiner als bei den Verfahren des Standes der Technik dimensioniert sein, da keine SO₂-Spitzen mehr zu bewältigen sind, sondern der SO₂-Ausstoß kontinuierlich und gleichmäßig erfolgt.
3. Der regelmäßige, kontinuierliche Ausstoß von SO₂ bei dem erfindungsgemäßen Verfahren erlaubt eine Rückgewinnung, insbesondere verbunden mit einer katalytischen Oxidation zu SO₃ und gegebenenfalls weiteren Umsetzung zu Schwefelsäure bzw. Oleum, welche wesentlich günstiger als Sulfitlauge zu entsorgen sind oder aber auch wieder in dem erfindungsgemäßen Verfahren eingesetzt bzw. rezykliert werden können, insbesondere wenn beispielsweise Vorstufen von Ionenaustauschern als Ausgangsmaterial eingesetzt werden.
4. Das erfindungsgemäße Verfahren bietet die Möglichkeit, Abfallprodukte wie gebrauchte Ionenaustauscher und verbrauchte Katalysatoren zu entsorgen und in nützliche Produkte - Aktivkohlekügelchen - umzuwandeln. Gemäß dem erfindungsgemäßen Verfahren erhält man in guten Ausbeuten äußerst nützliche, hochwertige, abriebfeste Aktivkohlekügelchen auch aus zu entsorgenden Abfallstoffen, die sonst anderweitig entsorgt, insbesondere verbrannt oder gelagert werden müßten. Hierin ist - gerade in Zeiten wachsenden Umweltbewußtseins - ein Vorteil der vorliegenden Erfindung zu sehen. Somit ist Gegenstand der vorliegenden Erfindung gleichermaßen ein Verfahren zur Entsorgung und Wiederaufbereitung von Abfallstoffen.

Nach dem erfindungsgemäßen Verfahren läßt sich Aktivkohle in Kugelform erhalten.

Wie zuvor erwähnt, hängt die Teilchengröße der erhaltenen Kugelkohle vom Ausgangsmaterial ab. Handelsübliche Ausgangsprodukte führen im allgemeinen zu Aktivkohlekügelchen von etwa 0,2 mm bis etwa 1,0 mm Durchmesser, insbesondere etwa 0,3 mm bis etwa 0,8 mm Durchmesser, mit Mittelwerten um etwa 0,4 mm bis etwa 0,5 mm. Während der Schwelung und Aktivierung bleibt die Kugelform der Ausgangsmaterialien erhalten. D. h. durch die Form der Ausgangsmaterialien läßt sich gezielt die Teilchengröße des Endproduktes steuern und bestimmen, was einen weiteren Vorteil des erfindungsgemäßen Verfahrens darstellt.

Der Durchmesser der auf diese Weise hergestellten Aktivkohlekügelchen ist um circa 0,1 mm kleiner als jene der Polymerkügelchen, so daß bei entsprechender Auswahl des Ausgangsmaterials der Durchmesser der Kugelkohle beeinflußt werden kann. Für die meisten Anwendungen sind Kugeldurchmesser von etwa 0,2 mm bis etwa 1,0 mm, insbesondere etwa 0,3 mm bis etwa 0,8 mm, mit Mittelwerten von etwa 0,4 mm bis etwa 0,6 mm, besonders geeignet.

Durch die Aktivierung lassen sich innere Oberflächen von etwa 800 m²/g bis etwa 1.500 m²/ g erzielen, bevorzugt werden etwa 900 m²/g bis etwa 1.200 m²/g. Der Berstdruck für ein einzelnes Aktivkohlekügelchen beträgt im allgemeinen circa 5 Newton bis circa 20 Newton. Das Rüttelgewicht liegt bei etwa 400 g/l bis etwa 800 g/l, vorzugsweise bei etwa 500 g/l bis etwa 750 g/l.

Die erfindungsgemäß erhaltene Kugelkohle ist sehr abriebfest - der Abrieb ist bis zu 100mal geringer als der einer guten Kornkohle -, rieselfähig, staubfrei und sehr druckfest. Nach dem erfindungsgemäßen Verfahren lassen sich Aktivkohlekügelchen hoher Festigkeit, insbesondere Abriebfestigkeit, erhalten.

Eine wichtige Rolle für die Aktivität der Kugelkohle spielen die Poren der Aktivkohle, insbesondere die Mikroporen mit einem Durchmesser bis zu etwa 20 Å, da diese in der Größenordnung der meisten zu adsorbierenden Moleküle liegt. Auf die Mikroporen ist im allgemeinen auch der Hauptanteil der inneren Oberfläche der Aktivkohle zurückzuführen. Daneben sind auch die sogenannten Mesoporen - bisweilen auch als Übergangs- oder Zuleitungsporen bezeichnet - mit Durchmessern von etwa 20 bis etwa 500 Å von Bedeutung.

Weiterhin gibt es auch noch einen Anteil an noch größeren Makroporen. Durch die Auswahl der Rohstoffe und die Verfahrensführung bei der Aktivierung lassen sich die Eigenschaften der Endprodukte gezielt steuern. Gewünscht ist ein hoher Anteil an Mikroporen.

Dem Fachmann ist bekannt, daß Porenvolumen, Porendurchmesser und Porenverteilung je nach Aktivierungsgrad variieren und das Porensystem und die Porenstruktur, insbesondere der Porendurchmesser, sowie die Oberflächenstruktur des Endproduktes durch Temperatur und Aktivierung gezielt beeinflußt werden können, so daß diesbezüglich auf die einschlägige Fachliteratur verwiesen werden kann.

Die nach dem erfindungsgemäßen Verfahren hergestellten Aktivkohlekügelchen zeigen gute bis ausgezeichnete Adsorptionseigenschaften.

Des weiteren besteht die Möglichkeit, die Adsorptionseigenschaften der erfindungsgemäß hergestellten Aktivkohlekügelchen durch Imprägnierung mit Katalysatoren (Enzyme, Metalle wie z. B. Kupfer, Silber, Platin, Chrom, Zink, Quecksilber, Palladium, Cadmium, Eisen etc. sowie Verbindungen dieser Metalle) zu beeinflussen bzw. zu modifizieren. Das gemäß dem erfindungsgemäßen Herstellungsprozeß erhaltene Aktivkohleprodukt kann also eine katalytisch wirksame Komponente, vorzugsweise eine Verbindung eines katalytisch aktiven Metalls, umfassen. Die Imprägnierung von Aktivkohle mit Katalysatoren ist dem Fachmann an sich geläufig, so daß diesbezüglich auf die einschlägige Fachliteratur verwiesen werden kann.

Die nach dem erfindungsgemäßen Verfahren hergestellten Aktivkohlekügelchen können für die unterschiedlichsten Anwendungen eingesetzt werden. Die nach dem erfindungsgemäßen Verfahren hergestellten Aktivkohlekügelchen können beispielsweise Verwendung finden zur Herstellung von Adsorptionsmaterialien wie Adsorptions(flächen)filtern, Filtermatten, Geruchsfiltern, Flächenfiltern für Schutzanzüge insbesondere für den zivilen und/oder militärischen Bereich, Filtern für die Raumluftreinigung, Gasmaskenfiltem und adsorptionsfähigen Trägerstrukturen oder aber für Schutzmaterialien, insbesondere Schutzanzüge gegen chemische Gifte wie Kampfstoffe, oder für Filter, insbesondere Filter zur Entfernung von Schad-, Gift- und/oder Geruchsstoffen aus Luft- bzw. Gasströmen.

Die erfindungsgemäß hergestellten Aktivkohlekügelchen können somit Verwendung finden für Adsorptionsmaterialien, insbesondere Filter aller Art wie Adsorptions(flächen)filter, Filtermatten, Geruchsfilter, Flächenfilter für Schutzanzüge insbesondere für den zivilen und/oder militärischen Bereich wie Schutzanzüge gegen chemische Gifte wie Kampfstoffe, Filter für die Raumluftreinigung sowie hieraus hergestellte Schutzanzüge, Gasmaskenfilter, Filter zur Entfernung von Schad-, Gift- und/oder Geruchsstoffen aus Luft- bzw. Gasströmen und adsorptionsfähige Trägerstrukturen.

Die vorliegende Erfindung wird anhand der folgenden Ausführungsbeispiele veranschaulicht, welche die vorliegende Erfindung aber keinesfalls beschränken sollen.

Dem Fachmann werden beim Lesen der Beschreibung und der Beispiele zahlreiche weitere Ausgestaltungen, Variationen oder Abwandlungen der vorliegenden Erfindung denkbar erscheinen, ohne daß er dabei den Rahmen der vorliegenden Erfindung verläßt.

### AUSFÜHRUNGSBEISPIELE

### Beispiel 1:

1000 g eines gelförmigen, kugelförmigen, porösen Polymers auf Basis von Styrol und 4 % Divinylbenzol wurden mit 750g Oleum 20 % benetzt. Die Säure wurde in wenigen Minuten aufgenommen, so daß ein noch einigermaßen rieselfähiges Produkt resultierte. Dieses wurde anschließend kontinuierlich einem kontinuierlich arbeitenden Drehrohr mit Temperaturgradienten zugeführt und während 30 Minuten (Gesamtverweilzeit) vorgeschwelt. Nachdem die Säure im wesentlichen als SO₂ und H₂O eliminiert worden war, wurden insgesamt 940 g glänzende, schwarze Kügelchen erhalten. Diese wurden dann - nach kurzzeitiger Lagerung in einem thermisch isolierten Behälter - im noch heißen Zustand in einer Charge einem diskontinuierlich arbeitenden Drehrohr zugeführt und dort nachgeschwelt und bei 925 °C mit Wasserdampf/Stickstoff im Verhältnis von 1 : 3 während drei Stunden aktiviert,

Es resultierten 645 g Kugelkohle (Jodzahl 950) mit einem mittleren Durchmesser von 0,45 mm, einem Berstdruck pro Kügelchen ≥ 1000 g, einem Rüttelgewicht 660 g/l und einem Aschegehalt ≤0,1 %. Die Kugelkohle hatte ein Porenvolumen von circa 0,5 ml/g, das zumindest zu 90 % aus Mikroporen bestand.

### Beispiel 2:

In einem Becherglas wurden 1000 g der Vorstufe von DOWEX HCR-S - Vorstufe eines Kationenaustauscherharzes - mit 750 g Schwefelsäure und 250 g Oleum mit 20 % SO₃ angerührt. Innerhalb von wenigen Minuten wurde die Schwefelsäure vollständig unter Quellung der Polymerkügelchen aufgesaugt.

Dieses Material wurde in einem kontinuierlich arbeitenden Drehrohr mit Temperaturgradienten vorgeschwelt. Das Drehrohr bestand aus einem Quarzrohr (∅ 40 mm, Länge 800 mm), welches auf 650 °C aufgeheizt und mit etwas Stickstoff gespült wurde. Ein zu einer Spirale gedrehter Stahldraht im Innern des Rohrs sorgte für die Fortbewegung des Inhalts. Das Drehrohr wurde kontinuierlich am nicht beheizten Ende mit dem Gemisch aus Vorstufen und Schwefelsäure gefüllt und die Drehzahl auf 50 geregelt, so daß in der heißen Zone eine Verweilzeit von 20 Minuten erzielt wurde. Das andere Ende des Rohrs wurde mit einem Blechbehälter mit kreisrunder Öffnung lose abgeschlossen, in dem vorgeschwelte Material gesammelt wurde. Es resultierten insgesamt 820 g schwarzer, trockner und rieselfähiger Kügelchen. Es wurden insgesamt rund 500 g SO₂ und einige kohlenstoffhaltige, nicht identifizierte Produkte abgespalten. Ein teeriges Kondensat wurde nicht beobachtet.

Das vorgeschwelte Material wurde dann in einem diskontinuierlich arbeitenden Drehrohr der Firma PLEQ weiterverarbeitet, d. h. nachgeschwelt und aktiviert. Innerhalb von 45 Minuten wurden 500 °C erreicht. Bei dieser Temperatur wurden dem Spülgas (Stickstoff) 5 % Luft zugegeben und in den folgenden 45 Minuten bis auf 650 °C aufgeheizt. Sodann wurden dem Spülgas 25 % Wasserdampf zugegeben und die Temperatur in 30 Minuten auf 900 °C gebracht. Die Endtemperatur wurde 90 Minuten lang gehalten. Nach Abkühlung unter Stickstoff auf 400 °C wurde das Drehrohr entleert. Es resultierten 490 g einer vorzüglichen Kugelkohle mit einer inneren Oberfläche (BET) von 1200 m²/g und einem mittleren Durchmesser von 0,46 mm.

### Beispiel 3:

Das Beispiel 2 wurde wiederholt, jedoch wurden den 1000 g Vorstufen 1000 g Oleum 20 % und 500 g Schwefelsäure zugefügt. Es wurde eine sehr fließfähige Mischung erhalten. Die Verweilzeit im kontinuierlich arbeitenden Drehrohr wurde auf 90 Minuten erhöht. Es resultierten 1090 g schwarzer, trockener und rieselfähiger Kügelchen, die bis zu einer BET-Oberfläche von 950 m²/g aktiviert wurden. Die Ausbeute betrug 790 g.

## Patentansprüche

1. Verfahren zur Herstellung kugelförmiger Aktivkohle durch Schwelung und Aktivierung von Polymerkügelchen auf Basis von Styrol und Divinylbenzol, die chemische Gruppen, welche bei ihrer thermischen Zersetzung zu freien Radikalen und somit zu Vernetzungen führen, insbesondere Sulfonsäuregruppen, enthalten,
**dadurch gekennzeichnet,**
**daß** die Polymerkügelchen zunächst kontinuierlich vorgeschwelt und anschließend diskontinuierlich nachgeschwelt und aktiviert werden.

2. Verfahren nach Anspruch 1, **dadurch gekennzeichnet, daß** die zu Vernetzungen führenden chemischen Gruppen, insbesondere Sulfonsäuregruppen, bereits im Ausgangsmaterial vorhanden sind und/oder das Gewichtsverhältnis Polymer/Sulfonsäuregruppen etwa 2 : 1 bis etwa 1 : 1 beträgt.

3. Verfahren nach Anspruch 1 und/oder 2, **dadurch gekennzeichnet, daß** das Ausgangsmaterial Ionenaustauscher, insbesondere stark saure Kationenaustauscher, und/oder saure organische Katalysatoren, wie Katalysatoren für die Bisphenolsynthese oder für die MTBE-Synthese, sind.

4. Verfahren nach Anspruch 3, **dadurch gekennzeichnet, daß** den Ionenaustauschern, insbesondere Kationenaustauschern, und/oder den sauren organischen Katalysatoren eine Menge von etwa 5 bis etwa 25 % SO₃, vorzugsweise in Form von Schwefelsäure und/oder Oleum, vor und/oder während der Schwelung zugegeben wird

5. Verfahren nach Anspruch 1, **dadurch gekennzeichnet, daß** die Sulfonsäuregruppen erst vor und/oder während der Schwelung eingeführt werden, insbesondere durch Zugabe von SO₃, vorzugsweise in Form von Oleum, gegebenenfalls vermischt mit Schwefelsäure.

6. Verfahren nach Anspruch 5, **dadurch gekennzeichnet, daß** das Gewichtsverhältnis Polymer/Oleum 20 % etwa 1 : 1 beträgt.

7. Verfahren nach Anspruch 5, **dadurch gekennzeichnet, daß** das Gewichtsverhältnis Polymer/Oleum 20 %/Schwefelsäure etwa 1 : 1 : 0,5 beträgt.

8. Verfahren nach einem oder mehreren der vorhergehenden Ansprüche, **dadurch gekennzeichnet, daß** die Polymerkügelchen porös, insbesondere makroporös, und/oder gelförmig sind.

9. Verfahren nach einem oder mehreren der vorhergehenden Ansprüche, **dadurch gekennzeichnet, daß** die Vorschwelung in einem kontinuierlich arbeitenden Reaktionsgefäß, insbesondere Drehrohr, mit einem Temperaturgradienten von etwa 100 °C bis etwa 850 °C, vorzugsweise etwa 100 °C bis etwa 650 °C, und vorzugsweise bei einer Gesamtverweilzeit von etwa 1 bis etwa 4 Stunden, vorzugsweise etwa 2 bis etwa 3 Stunden, ganz besonders bevorzugt etwa 60 bis etwa 90 Minuten, durchgeführt wird, insbesondere wobei das geschwelte Material eine Temperatur von etwa 400 °C bis etwa 800 °C, vorzugsweise etwa 550 °C bis etwa 600 °C, erreichen sollte.

10. Verfahren nach einem oder mehreren der vorhergehenden Ansprüche, **dadurch gekennzeichnet, daß** das kontinuierlich vorgeschwelte Material in einem vorzugsweise thermisch isolierten Behälter gesammelt wird und bei Erreichen der Füllmenge in ein diskontinuierlich arbeitendes Reaktionsgefäß, insbesondere Drehrohr, zur weiteren Pyrolyse (Nachschwelung) und anschließenden Aktivierung eingebracht wird.

11. Verfahren nach einem oder mehreren der vorhergehenden Ansprüche, **dadurch gekennzeichnet, daß** die Aktivierung mit einem Gemisch aus Wasserdampf und Stickstoff und insbesondere bei Temperaturen von etwa 850 °C bis etwa 960 °C, vorzugsweise etwa 910 °C bis etwa 930 °C, insbesondere bei Verweilzeiten von etwa 2 bis etwa 5 Stunden, vorzugsweise etwa 2 bis etwa 3 Stunden, durchgeführt wird.

12. Verfahren nach einem oder mehreren der vorhergehenden Ansprüche, **dadurch gekennzeichnet, daß** das insbesondere während der Vorschwelung kontinuierlich ausgetriebene SO₂ regeneriert, insbesondere über eine katalytische Oxidation zu SO₃ und weiter zu Schwefelsäure und/oder Oleum umgesetzt wird.

## Claims

1. Process for producing spherical activated carbon (activated carbon spherules) by carbonization (pyrolysis, smoldering) and activation of polymer spherules based on styrene and divinylbenzene, wherein said polymer spherules comprise chemical groups, particularly sulfonic acid groups, said chemical groups leading to the formation of free radicals and thus to cross-linkages by their thermal decomposition,
**characterized in**
**that** said polymer spherules are first subjected to a continuous pre-carbonization step and are then discontinuously treated in re-carbonization and activation step.

2. Process according to claim 1, **characterized in that** said chemical groups, particularly sulfonic acid groups, leading to cross-linkages are already present in the starting material and/or that the weight ratio polymer/sulfonic acid groups is about 2 : 1 to about 1 : 1.

3. Process according to claim 1 and/or 2, **characterized in that** said starting material is selected from the group consisting of ion-exchangers, particularly strongly acid ion-exchangers, and/or acid organic catalysts, such as catalysts for the synthesis of bisphenols or the synthesis of methyl-tert.-butyl ether (MTBE).

4. Process according to claim 3, **characterized in that** an amount of about 5 to about 25 % SO₃, preferably in the form of sulphuric acid and/or oleum, is added to said ion-exchangers, preferably strongly acid ion-exchangers, and/or to said acid organic catalysts before and/or during said carbonization step.

5. Process according to claim I , **characterized in that** said sulfonic acid groups are introduced before and/or during said carbonization step, particularly by addition of SO₃, preferably in the form of oleum, optionally in mixture with sulphuric acid.

6. Process according to claim 5, **characterized in that** the weight ratio polymer/oleum 20 % is about 1: 1.

7. Process according to claim 5, **characterized in that** the weight ratio polymer/oleum 20 %/sulphuric acid is about 1: 1: 0,5.

8. Process according to one or more of the preceding claims, **characterized in that** said polymer spherules are porous, particularly macroporous, and/or gel-like.

9. Process according to one or more of the preceding claims, **characterized in that** said carbonization step is carried out in a reaction vessel, particularly rotary-tube, working continuously and having a temperature-gradient of from about 100 °C to about 850 °C, preferably from about 100 °C to about 650 °C, and preferably with a total residence time of about 1 to about 4 hours, preferably about 2 to about 3 hours, more preferably about 60 to about 90 minutes, particularly wherein the carbonized material may reach a temperature of about 400 °C to about 800 °C, preferably about 550 °C to about 600 °C.

10. Process according to one or more of the preceding claims, **characterized in that** said the material pre-carbonized is continuously collected in a heat-insulated vessel and, when the filling capacity of said heat-insulated vessel is reached, is then introduced into a reaction vessel, particularly rotary tube, working discontinuously for further pyrolysis (re-carbonization) and subsequent activation.

11. Process according to one or more of the preceding claims, **characterized in that** said activation is carried out with a mixture of steam (water-vapor) and nitrogen and particularly at temperatures of from about 850 °C to about 960 °C, preferably from about 910 °C to about 930 °C, particularly with a residence time of about 2 to about 5 hours, preferably about 2 to about 3 hours.

12. Process according to one or more of the preceding claims, **characterized in that** SO₂ continuously expulsed particularly during pre-carbonization is regenerated, in particular by catalytic oxidation to SO₃ and further processing to sulphuric acid and/or oleum.

## Revendications

1. Procédé de production de charbon actif sous forme sphérique par carbonisation et activation de sphérules de polymère à base de styrène et de divinylbenzène, qui contiennent des groupes chimiques dont la décomposition thermique conduit à des radicaux libres et, par conséquent, à des réticulations, en particulier des groupes acide sulfonique,
**caractérisé en ce**
**que** les sphérules de polymère sont d'abord pré-carbonisées en continu et sont puis, en discontinu, post-carbonisés et activées.

2. Procédé suivant la revendication 1, **caractérisé en ce que** les groupes chimiques conduisant à des réticulations, en particulier les groupes acide sulfonique, sont déjà présents dans la matière première et/ou que le rapport en poids du polymère aux groupes acide sulfonique s'élève à une valeur d'environ 2 : 1 à environ 1 : 1.

3. Procédé suivant la revendication 1 et/ou la revendication 2, **caractérisé en ce que** la matière première consiste en échangeurs d'ions, en particulier en échangeurs de cations fortement acides, et/ou en catalyseurs organiques acides, tels que des catalyseurs pour la synthèse du bisphénol ou pour la synthèse de l'éther de méthyle et de tertiobutyle.

4. Procédé suivant la revendication 3, **caractérisé en ce qu'**une quantité d'environ 5 à environ 25 % de SO₃, avantageusement sous forme d'acide sulfurique et/ou d'un oléum, est ajoutée avant et/ou pendant la carbonisation aux échangeurs ioniques, en particulier aux échangeurs cationiques, et/ou aux catalyseurs organiques acides.

5. Procédé suivant la revendication 1, **caractérisé en ce que** les groupes acide sulfonique ne sont introduits qu'avant et/ou pendant la carbonisation, en particulier par addition de SO₃, avantageusement sous forme d'oléum, le cas échéant en mélange avec de l'acide sulfurique.

6. Procédé suivant la revendication 5, **caractérisé en ce que** le rapport en poids du polymère à l'oléum à 20 % s'élève à environ 1 : 1.

7. Procédé suivant la revendication 5, **caractérisé en ce que** le rapport en poids polymère / oléum à 20 % / acide sulfurique s'élève à environ 1 : 1 : 0,5.

8. Procédé suivant l'une ou plusieurs des revendications précédentes, **caractérisé en ce que** les sphérules de polymère sont poreuses, en particulier macroporeuse et/ou sous forme de gel.

9. Procédé suivant l'une ou plusieurs des revendications précédentes, caractérisé en ce que la pré-carbonisation est conduite dans un récipient de réaction travaillant en continu, en particulier un tube rotatif, avec un gradient de température allant d'environ 100 °C à environ 850 °C, avantageusement d'environ 100 °C à environ 650 °C et, avantageusement, pendant une durée totale de séjour d'environ 1 heure à environ 4 heures, avantageusement d'environ 2 heures à environ 3 heures, préférentiellement d'environ 60 minutes à environ 90 minutes, la matière carbonisée devant atteindre une température d'environ 400 °C à environ 800 °C, avantageusement d'environ 550 °C à environ 600 °C.

10. Procédé suivant l'une ou plusieurs des revendications précédentes, caractérisé en ce que la matière pré-carbonisée en continu est recueillie dans un récipient avantageusement isolé thermiquement et, lorsqu'elle a atteint la masse de remplissage, elle est introduite dans un récipient de réaction travaillant en discontinu, en particulier un tube rotatif, pour la poursuite de la pyrolyse (post-carbonisation) et l'activation.

11. Procédé suivant l'une ou plusieurs des revendications précédentes, caractérisé en ce que l'activation est effectuée avec un mélange de vapeur d'eau et d'azote et en particulier à des températures d'environ 850 °C à environ 960 °C, avantageusement d'environ 910 °C à environ 930 °C, en particulier pendant des durées de séjour d'environ 2 heures à environ 5 heures, avantageusement d'environ 2 heures à environ 3 heures.

12. Procédé suivant l'une ou plusieurs des revendications précédentes, **caractérisé en ce que** le SO₂ chassé en continu, en particulier pendant la pré-carbonisation, est régénéré, en particulier par la voie d'une oxydation catalytique en SO₃, puis converti en acide sulfurique et/ou en oléum.
